# EUROPEAN PATENT SPECIFICATION

(11) **EP 2 762 232 B1**
(45) Date of publication and mention of the grant of the patent: **01.01.2020**
(21) Application number: 12837060.8
(22) Date of filing: 08.08.2012
(51) Int. Cl.: A23L 7/10

(54) **PRE-MILLING TREATMENT METHOD FOR PRODUCING RICE FLOUR AND DEVICE THEREFOR**
VORZERKLEINERUNGSBEHANDLUNGSVERFAHREN ZUR HERSTELLUNG VON REISMEHL UND VORRICHTUNG DAFÜR
PROCÉDÉ DE PRÉTRAITEMENT DE BROYAGE POUR PRODUCTION DE FARINE DE RIZ ET DISPOSITIF ASSOCIÉ

(30) Priority: 29.09.2011 JP 2011213800
(43) Date of publication of application: 06.08.2014
(73) Proprietor: Satake Corporation, Chiyoda-ku Tokyo 101-0021 (JP)
(72) Inventor: FUKUMORI, Takeshi, Tokyo 101-0021 (JP); MIZUNO, Hidenori, Tokyo 101-0021 (JP); MOTOOKA Keiji, Tokyo 101-0021 (JP); KAJIHARA, Kazunobu, Tokyo 101-0021 (JP); HAKO, Tsutomu, Tokyo 101-0021 (JP); KASHIWA, Yoji, Tokyo 101-0021 (JP); FUKAMI, Koji, Tokyo 101-0021 (JP)
(74) Representative: Bates, Philip Ian
(86) International application number: PCT/JP2012/070198
(87) International publication number: WO 2013/046945

(56) References cited:
- EP-A1- 1 661 467
- JP-A- S 495 752
- JP-A- H0 463 555
- JP-A- H04 287 652
- JP-A- 2004 049 036
- JP-A- 2004 097 081
- US-A- 3 228 774

## Description

### Technical Field

**This invention relates to flour milling pretreatment method for manufacture of rice flour and an apparatus therefor.**

### Background of the Invention

Hitherto, a rice flour manufacturing method has been known wherein after milled rice water-washed has been subject to soaking in less than 24 hours upward of 2 hours to contain moisture, the milled rice is milled by water-grinding or air current flour milling. According to this manufacturing method, the long soaking of the milled rice after water washing made it possible to manufacture rice flour of good quality, which is fine in particle size.

The long soaking of the milled rice is conducted for purposes of providing uniform distribution of moisture in the rice grains uniform and softening the rice grains. If the soaking of the milled rice is conducted only for a short period of time, moisture is not uniformly distributed in the rice grains and consequently, the rice grain has many portions of less water absorption. In this instance, the milled rice is milled into coarse rice flour at the portions of less water absorption so that the rice flour has particle size which proportion of coarse flour becomes more. For this reason, the water washing and soaking steps prior to flour milling are extremely important to quality of rice flour (see non-patent reference 1, for example).

However, it is not permissible to discharge into river, sewerage, or the like drainage used in the water-washing and soaking steps as it is, and prior to discharge of the drainage to the exterior, the drainage must be purified by its treatment plant such as aerobic biological treatment or anaerobic biological treatment, for example. Hitherto, huge expenses including initial and running costs for drainage treatment were spent.

### Prior art document

### Non-patent reference:

Non-patent reference 1: Author: Fumio Kurasawa " SAISHIN SHOKUHIN KAKO KOZA", published as the first edition by Kabushiki Kaisha Kenhaku Sha on November 25, 1982, P. 221-223.

Patent reference; EP1661467 discloses that grains having water content previously adjusted to approximately 14% are circulatedly supplied to and discharged through a rotary barrel during its rotation and that water is added to the grains within the rotary barrel. When the water content in the grains reaches between 20% and 30%, the circulation of the grains is terminated and the grains are discharged through the rotary barrel to the exterior for drying the grains.

### Summary of the Invention

In the light of the above-mentioned problems, an object of the invention is to provide a flour milling pretreatment method for manufacture of rice flour and an apparatus therefor wherein any water-washing and soaking steps which produce drainage, are not required and the hardness of rice can be significantly reduced.

This object of the invention can be achieved by providing a pretreatment method for manufacture of rice flour comprising a moisture homogenizing step for supplying air of low humidity to milled rice having a moisture content of 13.0∼16.0% (w. b.%), the moisture content to adjust the moisture content in the milled rice to 11.0 ∼13.0% (w. b.%), thereby homogenizing the moisture and a moisture conditioning step for adding water to the rice grains had the moisture homogenizing step passed through, until moisture content in each of the rice grains of rice reaches 20. 0∼45.0% (w. b. %), and facilitating water absorption into the core of each of the grains of the milled rice after the water addition.

According to the invention defined in claim 2, located between the moisture homogenizing step and the moisture conditioning step is a bran removing step for adding water to the moisture homogenized milled rice to soften the aleuronic layer on each of the rice grains, and removing both the bran and the softened aleuronic layer by the friction of rice grains relative to one another.

### Effect of the Invention

In general, moisture content in milled rice used as material has been known as being 15.5% (w. b.%) (for example, fifth revised and enlarged food component table 2006) but indeed, new rice has moisture content of 14.0∼16.0% (w. b.%) and long-store rice has moisture content of 13.0∼ 15. 0% (w. b.%). The moisture content varies depending on freshness of the rice and state of storage. To this end, the present invention lies in supplying air of low humidity to milled rice having a moisture content of 13.0∼16.0% (w. b.%) to adjust the moisture content in the milled rice to 11.0 ∼13.0% (w. b.%), thereby substantially homogenizing the moisture. Almost all of the grains of milled rice thus have homogenized moisture therein and furthermore, many fine cracks are formed on the surface of each of grains of milled rice so that the rice grains are in a state where they are apt to absorb moisture from the surface of the grains.

In the moisture conditioning step, water is added to the rice grains passed through the moisture homogenizing step until the moisture content in each of the rice grains of rice reaches 20. 0 ∼45.0% (w. b.%). In this moisture conditioning step, the water deposited on the surface of the rice grains penetrates through the fine cracks on the surface of the rice grains into their starch layer. In the starch layer of the rice grains, osmotic pressure in the cell wall tissues results in absorption of moisture into the compound starch granule. Consequently, rapid swelling of the starch granule results in increase in amount of strain in cell wall tissues so that the hard cell wall tissues are apt to be broken, thereby bringing the rice into a state of decreased hardness. Thus, in a flour milling step which is a subsequent step, the cell wall tissues are easily broken so that the rice grains can be finely crushed up to single starch granules.

It will be noted from the foregoing that with the flour milling pretreatment method for manufacture of rice flour according to the invention, any use of a great quantity of water is not required because there are no needs for a fully soaking step where rice grains are soaked in water filled in a vessel, for a long period of time, and a step for previously washing the rice grains in water, and therefore, any drainage treatment plant is not required. This can result in drastic reduction in running costs. Since in the subsequent flour milling step, cell wall tissues are easily broken so that the rice grains can be finely crushed up to single starch granules, reduction in power which is to be required in the flour milling step is possible, and occurrence of damaged starch can be prevented.

According to the invention defined in claim 2, as described above, a bran removing step is located between the moisture homogenizing step and the moisture conditioning step, and in the bran removing step, water is added to the moisture homogenized milled rice to soften the aleuronic layer on each of the rice grains, and the softened aleuronic layer can be removed by the friction of rice grains relative to one another, together with the bran. Due to this fact, in the case where milled rice having some bran slightly stuck on the surface of the rice grains is used as material or in the case where foreign long grain variety (for example, long grain variety of Thailand) is used as material, aleuronic layer, together with the bran, can be removed by friction of the grains relative to one another after softened by adding water to the surface of the rice grains and this can contribute to improvement in quality of crushed rice flour.

### Brief Description of the Drawings

Figure 1 is a flow chart showing a flour milling pretreatment method for manufacture of rice flour according to the present invention ; and
Figure 2 is a flow chart of a manufacturing apparatus for carrying out the flour milling pretreatment method for manufacture of rice flour according to the present invention.

### Best Mode for Carrying Out the Invention

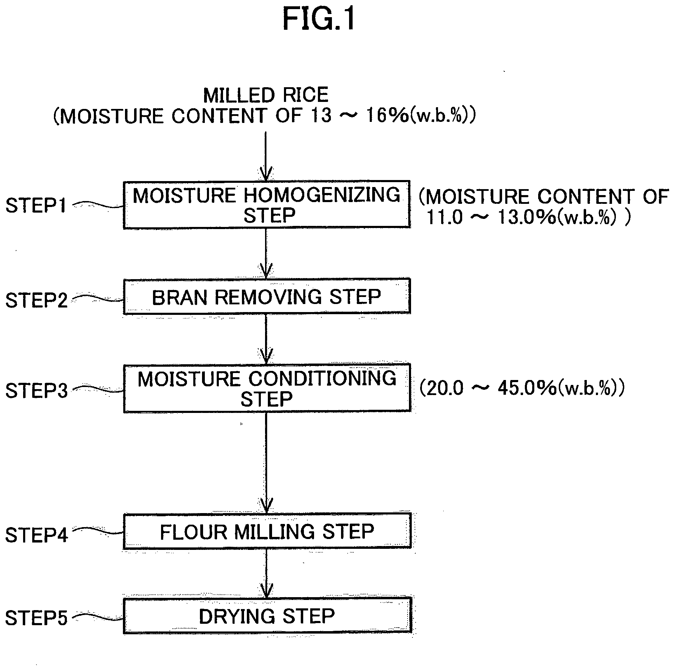

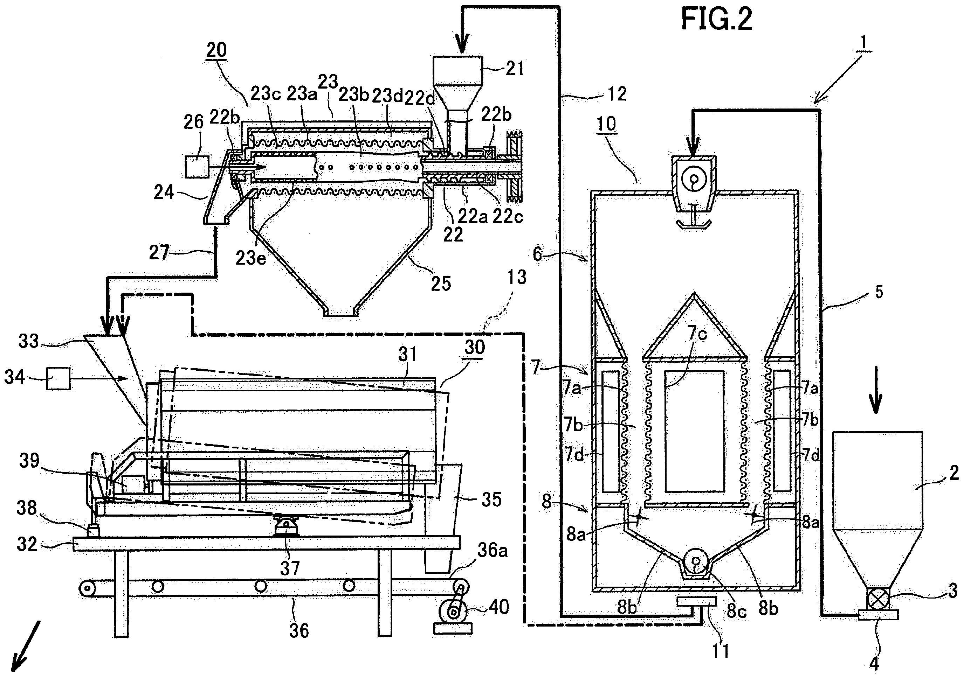

A preferred embodiment of the invention is described below on the basis of the accompanying drawings. Figure 1 is a flow chart showing a flour milling pretreatment method for manufacture of rice flour, and Figure 2 is a flow chart showing a manufacturing apparatus for carrying out the flour milling pretreatment method for manufacture of rice flour.

If rice is milled rice after rice milling, it can be used irrespective of place of production, variety, preservation way, and milling process of rice. Rice milling degree is not limited as far as a conventional milling means is used and rice milling yield may be less than 94%. Moisture content in the milled rice, preferably, is 13.0 ∼16.0% (w. b.% (wet basis percent)). Milled rice with high moisture content tends to having a good taste value and in the case where the taste of rice flour is taken into account, the polished rice with high moisture content may preferably be used. Broken rice, feed rice or rice of old crops may also be used as material for rice flour, but it is desired that use of rice with extremely poor quality be avoided.

According to the invention, in a first moisture homogenizing step (step 1 as shown in figure 1), milled rice having a moisture content of 13.0∼16.0% (w. b.%) is dried by air of a temperature of 40∼60°C and low humidity of less than 10% in relative humidity for about 10∼20 minutes so that the moisture content in the milled rice is adjusted to 11.0 ∼13.0% (w. b.%), and the distribution of moisture in the milled rice is substantially homogenized.

Apparatus to be used in the moisture homogenizing step, is not limited, but from a viewpoint of economy and burning prevention, for example, a falling drying machine as indicated by reference numeral 10 in figure 2, may preferably be used. The falling drying machine is arranged to be capable of suitably setting temperature of air, air flow, drying time and the like, depending on desired final moisture.

Almost all the grains of milled rice thus obtained, have moisture homogenized therein and furthermore, many fine cracks are formed on the surface of each of grains of milled rice so that the rice grains are in a state where they are apt to absorb moisture from the surface of the grains. The milled rice is then led to a bran removing step (step 2 as shown in figure 1) where after water has been added to the grains of milled rice to soften the aleuronic layer of the rice grains, the aleuronic layer is rubbed off of the surface of the rice grains by the friction action of rice grains relative to one another so that removal of bran from the rice grains is carried out. In the case where wash-free rice, which bran has been previously removed from the surface of the grains of the milled rice, is used as material for rice flour, the bran removing step may be omitted. Furthermore, in the case where foreign-produced rice with poor quality is used, it is desired to locate the bran removing step before or after the moisture homogenizing step.

Apparatus to be used in the bran removal step is not limited, but from a viewpoint of economy and efficiency, for example, a humidifying-type rice polishing machine 20 as shown in figure 2 is preferably used. The humidifying -type rice polishing machine may be of normal pressure, and is arranged to be capable of suitably setting a quantity of water, and a time of passage, depending on desired final moisture content and whiteness.

The grains of rice is then led to a moisture conditioning step (step 3 as shown in figure 1), where water is added to the rice grains such that moisture content in the grains of rice is 20. 0∼ 45.0% (w. b.%). In this moisture conditioning step, the water deposited on the surface of the rice grains penetrates through the fine cracks on the surface of the rice grains into the their starch layer, and in the starch layer of the rice grains, osmotic pressure in the cell wall tissues results in absorption of moisture into the compound starch granule. Consequently, rapid swelling of the starch granule results in increase in mount of strain in cell wall tissues so that the hard cell wall tissues are apt to be broken, thereby bringing the rice into a state of decreased hardness.

Apparatus to be used in the moisture conditioning step is not limited, but from economy and efficiency, a rotary drum-type moisture conditioner 30 as shown in figure 2 may preferably be used. The moisture conditioner is arranged to be capable of suitably setting a quantity of water, depending on desired final moisture content.

Step 4 as shown in figure 1 is a flour milling step capable of crashing rice grains into flour. and any limitation is not imposed on the crashing system and particle size. Crashing system and particle size may be selected in accordance with particle size of rice flour.

Step 5 as shown in figure 1 is a drying step for drying the rice flour by an airflow, and the drying step is capable of suitably adjusting drying time and temperature of an airflow such that the moisture content in the rice flour will be within the range of 8.0 ∼14. 0% (w. b.%). It will be noted that with the flour milling pretreatment method for manufacture of rice flour according to the invention, any use of a great quantity of water is not required because there are needs for a fully soaking step where rice grains are soaked in water filled in a vessel, for a long period of time, and a step for previously water-washing the rice grains, and therefore, any drainage treatment plant is not required. This can result in drastic reduction in running costs.

An apparatus for carrying out the flour milling pretreatment method for manufacture of rice flour is described below.

Referring to figure 2, the flour milling pretreatment apparatus 1 for manufacture of rice flour comprises a falling drying machine 10, a humidifying-type rice polishing machine 20, and a rotary drum-type moisture conditioner 30.

A rice receiving tank 2, a delivery valve 3 and a conveying device 4 are provided in order, upstream of the falling drying machine 10. Piping 5 is located between the conveying device 4 and the falling drying machine 10 so that the conveying device 4 can feed rice grains by a predetermined quantity into a falling drying machine 10 which includes a storage tank section 6 for storing the rice grains, a drying section 7 for drying the rice grains by air of low humidity and a discharge section 8 for discharging the rice grains to the exterior of the machine.

The drying section 7 is provided with a pair of rice grain falling passages 7b, 7b each defined by perforated plates 7a, 7a, an air inlet 7c provided at a space surrounded by the pair of rice grain falling passage 7b, 7 b for delivering air of low humidity toward the rice grain falling passages 7b, 7b, and an air discharge passage 7d, 7d provided at a space surrounded by each of the rice grain falling passages 7b, 7b and the machine frame of the drying section 7 and connected to an air discharge fan (not shown) to evacuate to the exterior of the machine the air passing through the rice grain falling passages 7b, 7b.

The discharge section 8 includes a rotary valve 8a, 8a located at the lower end of each rice grain falling passage 7b, 7b, a funnel-like portion 8b for collecting the rice grains delivered through the rotary valves 8a, 8a and a screw conveyor 8c for conveying the rice grains collected in the funnel-like portion 8b, to the exterior of the machine. A conveying means such as a elevator may be provided between the discharge section 8 and the storage tank section 6 to repeatedly dry the rice grains.

Conveying means 11 is located downstream of the falling drying machine 10 and there is provided piping 12 extending between the conveying means and a humidifying-type rice polishing machine 20. With this arrangement, the rice grains of which almost all have the homogenized moisture can be fed into the humidifying-type rice polishing machine 20 by a predetermined quantity. In the case of wash-free rice that bran has been previously removed from the surface of the grains of milled rice, the bran removal process can be omitted and piping 13 to a rotary drum- type moisture conditioning machine 30 may be substituted for the piping 12 to the humidifying -type rice polishing machine 20.

Humidifying-type rice polishing machine 20 includes a rice storage tank 21 for temporally storing the rice grains, a grain conveyor 22 for conveying horizontally the rice grains from the storage tank 21, a rice polishing section 23 for polishing the rice grains conveyed horizontally by the grain conveyor 22, a rice discharge portion 24 for discharging the polished rice grains from the rice polishing section 23, a bran collecting section 25 for collecting bran removed from the rice grains under the polishing action in the rice polishing section, and a water adding device 26 for humidifying the rice grains in the rice polishing section 23.

The conveyor 22 comprises a screw conveyor 22d secured to a proximal portion of a shaft 22c which is rotatively supported in bearings 22b, 22 mounted in a housing 22a. The conveyor 22 thus is capable of conveying the rice grains falling from the storage tank 21, toward the rice polishing section 22 by the rotating screw conveyor.

The rice polishing section 23 includes a horizontally disposed perforated polishing cylinder 23a for removing bran and a polishing rotor 23b secured to a distal portion of the shaft 22c within the perforated bran removing polishing cylinder 23a. A polishing chamber 23c is composed of a gap between the bran removing polishing cylinder 23a and the polishing rotor 23b, and a bran removing chamber 23d is defined outside of the bran removing polishing cylinder 23a. A bran collecting portion 25 is formed below the rice polishing section 23 in communication with the bran removing chamber 23d, for collection of the bran removed by polishing the rice grains.

The polishing rotor 23b is hollow and, is in communication with the water adding device 26, at an end thereof near the rice discharge portion 24, The hollow polishing rotor 23b is closed at the opposite end near the rice storage tank 21. A number of apertures 23e are formed in the hollow polishing rotor 23b such that drops of water are released through the apertures into the region of the rice polishing section 23. The water adding device 26 includes a water pipe, an adjusting valve and a water tank (not shown). As rice grains are carried toward the interior of the rice polishing section 23, water is supplied from the water adding device into the hollow portion of the polishing rotor 23b to add moisture through the apertures 23e to the surfaces of the rice grains, thereby humidifying and softening them instantaneously. The friction of rice grains relative to one another is performed thanks to the performed bran removing polishing cylinder 23a and the polishing rotor 23b. At this point, the bran is removed from the rice grains by rubbing off the thin layer on the surface of each rice grain, and the rice grains are discharged through the rice discharge portion 24 to the exterior of the machine.

There is provided piping 27 leading from the humidifying-type polishing machine 20 to a rotary drum-type moisture conditioner 30.

The rotary drum-type moisture conditioner 30 includes a rotary drum 31 adapted to rotate about a longitudinal axis of a barrel portion thereof and capable of varying an angle of inclination to the horizon, in a longitudinal direction of the barrel, a base 32 on which the rotary drum is mounted, a hopper 33 through which the rice grains are fed into the rotary drum 31, a water adding device 34 for supplying water through the hopper 33 to the rotary drum 31, a trough 35 for discharging the rice grains from the rotary drum 31 and a endless belt conveyor 36 for carrying out moisture conditioning of the rice grains discharged from the rotary drum 31.

Mounted on the base 32, are a fulcrum 37 for supporting the rotary drum 31 at its longitudinal mid point and a jack 38 for moving up and down the rotary drum 31 at its end to vary the angle of inclination of the rotary drum to the horizon. Actuation of the jack 38 permits the angle of inclination of the rotary drum 31 to be varied from 0° (horizon) to 10°, thereby controlling increase or decrease in residence rate and feed rate of the rice grains to be fed into the rotary drum 31. Mounted on the base 32 is a geared motor 39 for rotating the rotary drum 31 about the longitudinal axis of the barrel thereof.

The rotary drum 31 may be of a cylindrical shape or polygonal shape. In order that the rice grains fed through the hopper 33 and water supplied from the water adding device 34 may be mixed and stirred in the rotary drum, it is preferred to employ a rotary drum of a shape which has an increased stirring effect, that is, a polygonal shape. In the case where a rotary drum having less stirring effect is employed, it is desired to provide stirring members within the cylindrical interior of the drum.

A rice grain loosening device (not shown) is provided within the trough 35 through which the rice grains are discharged. With this loosening device, the water added rice grains are loosened and then fed onto the belt 36a of the endless belt conveyor 36 in a next process.

The belt 36a of the endless belt conveyor 36 may be a conventional belt or mesh belt through which water or air can be passed. From a viewpoint of economy, the conventional belt may be employed. In this process, the quantity of water to be added is limited to a degree which water is deposited on the surface of the rice grains within the rotary drum 31, and the moisture transfers to the center of each of the rice grain while the belt 36a is travelling on endless tracks from end to end, taking 10 ∼ 30 minutes. Due to the fact that large quantity of water enough to lead to excess water is not added to the rice grains, a conventional belt conveyor can be employed. Reference numeral 40 indicates a geared motor to drive the endless belt conveyor 36. Preferred examples according to the invention are described below.

### < Example 1 >

In example 1, a test was conducted to confirm whether or not the flour milling pretreatment process according to the invention makes differences in quality in the case where different materials are used.

Materials to be tested were of the following four kinds:

| | |
|---|---|
| Japan (short grain variety) non-glutinous rice : | Test 1 |
| Japan (short grain variety) broken rice : | Test 2 |
| Thailand (long grain variety) non-glutinous rice : | Test 3 |
| Thailand (long grain variety) broken rice : | Test 4 |

The flour milling pretreatment process according to the invention was carried out with respect to the materials of those four kinds, and the rice grains obtained were milled under the same conditions. Degree of damaged starch, distribution of particle sizes and moisture content were measured. The results are shown in table 1.

**Table 1**

| Test Item | | | Test 1 | Test 2 | Test 3 | Test 4 |
|---|---|---|---|---|---|---|
| Production Country | | | Japan (short grain variety) | | Thailand (long grain variety) | |
| Material | | | Non-glutinous rice | Broken rice | Non-glutinous rice | Broken rice |
| Quality result | Moisture content (w.b.%) before milling | | 30.1 | 30.7 | 29.7 | 30.1 |
| | Moisture content (w.b.%) after milling | | 12.9 | 12.3 | 12.2 | 12.4 |
| | Damaged starch (%,14%m.b.) | | 4.9 | 7.3 | 5.0 | 3.8 |
| | Particle size *µ*m | Cumulative ratio 10% | 23.7 | 9.5 | 16.2 | 14.8 |
| | | Cumulative distribution 50% | 55.7 | 35.0 | 41.6 | 42.6 |
| | | Cumulative distribution 90% | 114.1 | 87.4 | 95.4 | 110.8 |
| Operation | Loading power(Kw) | | 55 | 55 | 55 | 55 |
| | Load factor(%) | | 92 | 95 | 86 | 95 |
| | Product flow rate (kg/H) | | 992 | 1026 | 903 | 1100 |

Table 1 shows that regardless of the different materials as in test 1, test 2, test 3 and test 4, no great difference was made between the varieties as regarding the moisture contents before milling and moisture contents after milling. Table 1 also shows that at cumulative ratio 50%, the particle sizes were 35.0 *µ*m(test 2), 41.6 *µ*m (test3), 42.6 *µ*m (test4) and 55.7 *µ*m (test 1), and no great difference was made in particle size between the varieties.

### < Example 2 >

In example 2, rice grains which are rich in *γ*-amino butyrate acid known as a kind of neurotransmitter were used, a comparison between a fully soaking process (the conventional flour milling pretreatment method) where rice grains were soaked in water filled in a vessel, for long period of time and the flour milling pretreatment method according to the invention, is made, and a test was conducted as to which process, GABA is more contained in flour milled by. Details of test way is indicated in table 2, an analyzing way of GABA content and an analyzing device are indicated in table 3a, and results of measurement of GABA content are shown in table 4.

**Table 2**

| Flour milling pretreatment method according to the invention | | Conventional flour milling pretreatment method (fully soaking method) | |
|---|---|---|---|
| Step | Condition | Step | Condition |
| Material | Thuseishinsenbon variety, grown in Hiroshima Prefecture in 2010 | Material | Same as on left side |
| GABA enriching | Temperature : 70 °C, Humidity: 95 %, Tempering for four hours | GABA enriching | Same as on left side |
| Rice milling | Whiteness degree 20% increase | Rice milling | Same as on left side |
| Homogenization | Hot air: 55 °C, Passage time 10 minutes | Rice washing | Primary water addition 7 liters /min Secondary water addition 3 liters / min |
| Rice polishing | Moisture addingrate0.36% | Soaking | One hour |
| Tempering | Moisture adding rate 27.0% | Tempering | Holding rice grains in bamboo basket for 20 minutes |
| Flour milling | Air flour milling machine | Flour milling | Same as on left side |
| Drying | Air drying machine | Drying | Same as on left side |

**Table 3**

| | |
|---|---|
| Mass | HV-60K,2000G (A&D) |
| Time | Stop watch (SEIKO) |
| Moisture content | Infrared moisture meter (FD600 (Ket) |
| Rice temperature | Thermistor thermometer IT-2100 (AS ONE) |
| Distribution of particle sizes | Microtrac particle size analyzer 9320HRA (Shimazu) |
| Damaged starch | AACC method (Method76-31) |
| Chromaticity | Color grader (Satake) |
| Lipid | Soxhlet's extracting method |
| Amino acid analyzing | High speed liquid chromatograph amino acid analyzing system (Shimazu) |

**Table 4**

| Flour milling pretreatment method according to the invention | | Conventional flour milling pretreatment method (fully soaking process) | |
|---|---|---|---|
| Step | GABAcontent (mg/100g) | Step | GABAcontent (mg/100g) |
| GABA brown rice | 18.7 | GABA brown rice | 18.7 |
| Rice milling | 13.9 | Rice milling | 13.9 |
| Homogenizing | 13.8 | Rice washing | 12.3 |
| Rice polishing | 13.5 | Soaking | - |
| Conditioning | 13.4 | Conditioning | 3.8 |
| flour milling | 13.4 | Flour milling | 3.8 |

Table 4 shows that with the flour milling pretreatment method according to the invention, there was no significant decrease in GABA content from after rice milling to after the flour milling. In the conventional flour milling pretreatment (fully soaking), GABA content significantly decreased after soaking. This is expected to be due to the fact that the flour milling pretreatment method according to the invention is a system in which water is not drained as in the washing and soaking steps. In the conventional flour milling pretreatment, GABA is expected to have flowed out in the soaking step because it is water-soluble substance.

As described above, the invention lies in providing the pretreatment process for manufacture of rice flour, comprising the moisture homogenizing step for homogenizing moisture by supplying air of low humidity to milled rice having a moisture content of 13.0∼16:0% (w. b.%) to adjust the moisture content in the milled rice to 11.0 ∼13.0% (w. b.%), and the moisture conditioning step for adding water to the milled rice which have the moisture homogenizing step passed through, up to the moisture content of 20.0 ∼45.0% (w. b.%) and facilitating absorption of moisture into the core of each of the rice grains. From this reason, quick swelling of the rice grains in the moisture conditioning step results in increase in quantity of strain in the cell wall tissues so that the hard cell wall tissues become apt to be broken. Accordingly, because hardness of rice becomes lower, the cell wall tissues are easily broken in the subsequent flour milling step so that the rice grains can be finely crushed up to single starch granules.

Since in the invention, there is no need for any fully soaking step which soaks the rice grains in water filled in a vessel and for any rice washing step for previously washing the rice grains, any use of a large quantity of water are not required and therefore, any drainage treatment plant is not required. This can result in drastic reduction in running costs.

Furthermore, due to the fact that the cell wall tissues are easily broken in the subsequent flour milling step so that the rice grains can be finely crashed up to single starch granules, reduction in power which is required in the flour milling step is possible and occurrence of damaged starch can be prevented.

In addition, by using rice grains which are rich in γ -amino butyrate acid (GABA) known as a kind of neurotransmitter and milling to rice flour the rice grains which were subject to the pretreatment according to the invention, rice flour having high GABA content can be easily manufactured due to the fact that GABA component does not flow out of the exterior because of no washing and soaping steps.

Though the best mode for carrying out the invention has been described above, it is to be understood that the invention is not limited to the above-mentioned embodiment and though the description is made with respect to rice, it also is to be understood that the invention can be applied to grains such as wheat or buckwheat, for example, and modifications may be made in the invention without departing from the sprit and scope thereof.

### Industrial Applicability

In the flour milling pretreatment for manufacture of rice flour according to the invention, any drainage treatment plant is not required, and therefore, a rice flour manufacturing plant could be constructed at low construction cost. In the case where rice grains which richly contain functional component such as *γ* -amino butyric acid (GABA) known as a kind of neurotransmitter are used as materials, the functional component never flow out into the exterior because there is no drainage and the present invention has extremely high industrial applicability.

### Description of the Reference Numerals

- 1: flour milling pretreatment apparatus
- 2: rice receiving tank
- 3: delivery valve
- 4: conveying device
- 6: storage tank section
- 7: drying section
- 7a: perforated plates
- 7b: rice grain falling passages
- 7c: air inlet
- 7d: air discharge passage
- 8: discharge section
- 8a: rotary valve
- 8b: funnel-like portion
- 8c: screw conveyor
- 10: falling drying machine
- 11: conveying means
- 12: piping
- 13: piping
- 20: humidifying-type rice polishing machine
- 21: rice storage tank
- 22.: grain conveyor
- 22a: housing
- 22b: bearings
- 22c: shaft
- 22d: screw conveyor
- 23: rice polishing section
- 23a: perforated polishing cylinder
- 23b: polishing rotor
- 23c: polishing chamber
- 23d: bran removing chamber
- 24: rice discharge portion
- 25: bran collecting section
- 26: water adding r device
- 27: piping
- 30: rotary drum-type conditioner
- 31: rotary drum
- 32: base
- 33: hopper
- 34: water adding device
- 35: trough
- 36: endless belt conveyor
- 37: fulcrum
- 38: jack
- 39: geared motor
- 40: geared motor

## Claims

1. A flour milling pretreatment method for the manufacture of rice flour including a moisture conditioning step (3) for adding water to the rice grains, **characterized in that** the flour milling pretreatment method also includes a moisture homogenizing step (1) for supplying low-humidity air to milled rice having a moisture content of 13.0∼16.0% (w. b.%), to adjust the moisture content in the milled rice to 11.0 ∼13.0% (w. b.%), thereby homogenizing the moisture content; and **in that**
the moisture conditioning step (3) is for adding water to the rice grains that have passed through the moisture homogenizing step (1) until the moisture content in each of the rice grains of rice reaches 20. 0∼45.0% (w. b.%), and facilitating water absorption into the core of each of the grains of the milled rice after the water addition.

2. A flour milling pretreatment method for the manufacture of rice flour according to claim 1, wherein located between the moisture homogenizing step and the moisture conditioning step is a bran removing step (2) for adding water to the moisture homogenized milled rice to soften the aleuronic layer on each of the rice grains, and removing both the bran and the softened aleuronic layer from the surface of each rice grain by the friction of rice grains relative to one another.

3. A flour milling pretreatment apparatus for the production of rice flour **characterized in that** the flour milling pretreatment apparatus comprises
a falling drying machine (10) for supplying air of a temperature of 40∼60°C and low humidity of less than 10% relative humidity to milled rice having a moisture content of a range of 13.0∼16.0% (w. b.%) for about 10∼20 minutes while the rice grains are in rice grain falling passages (7b), so that the milled rice is homogenized to the moisture content of 11.0 ∼ 13.0% (w. b.%);
a rotary drum-type conditioner (30) for adding water to the rice grains which have been homogenized to the moisture content of 11.0 ∼13.0% (w. b.%), until the moisture content in each of the rice grains of rice reaches 20. 0∼45.0% (w. b. %), and conducting a sleeping treatment of the rice grains for 10∼30 minutes; and
a humidifying-type rice polishing machine (20) located between the falling drying machine and rotary drum type moisture conditioner, for adding water to the rice grains to soften the aleuronic layer on each of the rice grains, and for removing both the bran and the softened aleuronic layer from the rice grains by the friction of the rice grains relative to one another.

4. A flour milling pretreatment apparatus for the manufacture of rice flour according to claim 3, wherein the rotary drum-type moisture conditioner (30) includes a rotary drum (31) arranged to rotate around an axis of a barrel thereof and capable of varying an angle of inclination thereof to the horizon in a longitudinal direction of the barrel, a water adding device (34) for supplying water into the rotary drum, and an endless belt conveyor (36) comprising a belt (36a) adapted to receive the rice grains discharged from the rotary drum, and to travel on an endless track for 10 ∼30 minutes in order that water deposited on the surface of each rice grain is absorbed to its core.

## Patentansprüche

1. Mehlmahlen-Vorbehandlungsverfahren zur Herstellung von Reismehl mit einem Feuchtigkeitsaufbereitungsschritt (3) zum Zugeben von Wasser zu den Reiskörnern, **dadurch gekennzeichnet, dass** das Mehlmahlen-Vorbehandlungsverfahren auch einen Feuchtigkeitshomogenisierungsschritt (1) zum Zuführen von Luft mit geringer Feuchtigkeit zu gemahlenem Reis mit einem Feuchtigkeitsgehalt von 13,0 ∼ 16,0 % (Gew.-%) zum Anpassen des Feuchtigkeitsgehalts im gemahlenen Reis an 11,0 ∼ 13,0 % (Gew.-%) enthält, wodurch der Feuchtigkeitsgehalt homogenisiert wird; und dadurch, dass
der Feuchtigkeitsaufbereitungsschritt (3) zum Zugeben von Wasser zu den Reiskörnern, die den Feuchtigkeitsaufbereitungsschritt (1) durchlaufen haben, bis der Feuchtigkeitsgehalt in jedem der Reiskörner von Reis 20,0 ∼ 45,0 % (Gew.-%) erreicht, und Erleichtern der Wasserabsorption in den Kern von jedem der Körner des gemahlenen Reises nach der Zugabe von Wasser ist.

2. Mehlmahlen-Vorbehandlungsvorrichtung für die Herstellung von Reismehl nach Anspruch 1, wobei zwischen dem Feuchtigkeitshomogenisierungsschritt und dem Feuchtigkeitsaufbereitungsschritt ein Kleieentfernungsschritt (2) zum Zugeben von Wasser zum feuchtigkeitshomogenisierten gemahlenen Reis zum Aufweichen der Aleuronschicht auf jedem der Reiskörner und Entfernen von sowohl der Kleie als auch der aufgeweichten Aleuronschicht von der Oberfläche jedes Reiskorns durch die Reibung von Reiskörnern relativ zueinander liegt.

3. Mehlmahlen-Vorbehandlungsvorrichtung für die Herstellung von Reismehl, **dadurch gekennzeichnet, dass** die Mehlmahlen-Vorbehandlungsvorrichtung Folgendes aufweist:
eine Fallendtrocknungsmaschine (10) zum Zuführen von Luft mit einer Temperatur von 40 ∼ 60 °C und niedriger Feuchtigkeit von weniger als 10 % relativer Luftfeuchtigkeit zu gemahlenem Reis mit einem Feuchtigkeitsgehalt in einem Bereich von 13,0 ∼ 16,0 (Gew.-%) für die Dauer von etwa 10 ∼ 20 Minuten, während die Reiskörner in Reiskörnerfallkanälen (7b) sind, so dass der gemahlene Reis auf den Feuchtigkeitsgehalt von 11,0 ∼ 13,0 % (Gew.-%) homogenisiert wird;
einen Aufbereiter des Drehtrommeltyps (30) zum Zugeben von Wasser zu den Reiskörnern, die auf den Feuchtigkeitsgehalt von 11,0 ∼ 13,0 % (Gew.-%) homogenisiert wurden, bis der Feuchtigkeitsgehalt in jedem der Reiskörner des Reises 20,0 ∼ 45,0 % (Gew.-%) erreicht, und Durchführen einer Ruhebehandlung der Reiskörner für die Dauer von 10 ∼ 30 Minuten; und
Reispoliermaschine des Befeuchtungstyps (20), die zwischen der Fallendtrocknungsmaschine und dem Feuchtigkeitsaufbereiter des Drehtrommeltyps liegt, zum Zugeben von Wasser zu den Reiskörnern zum Aufweichen der Aleuronschicht auf jedem der Reiskörner und zum Entfernen von sowohl der Kleie als auch der aufgeweichten Aleuronschicht von den Reiskörnern durch die Reibung der Reiskörner relativ zueinander.

4. Mehlmahlen-Vorbehandlungsvorrichtung für die Herstellung von Reismehl nach Anspruch 3, wobei der Feuchtigkeitsaufbereiter des Drehtrommeltyps (30) Folgendes enthält: eine Drehtrommel (31), die zum Drehen um eine Achse eines Fasses davon angeordnet ist und zum Variieren eines Neigungswinkels davon zur Horizontalen in einer Längsrichtung des Fasses fähig ist, eine Wasserzugabevorrichtung (34) zum Zuführen von Wasser in die Drehtrommel und einen Endlosbandförderer (36), der ein Band (36a) aufweist, das zum Aufnehmen der aus der Drehtrommel ausgetragenen Reiskörner und zum Bewegen auf einer Endlosbahn für die Dauer von 10 ∼ 30 Minuten ausgeführt ist, damit auf die Oberfläche jedes Reiskorns aufgebrachtes Wasser zu seinem Kern absorbiert wird.

## Revendications

1. Procédé de prétraitement de broyage de farine pour la fabrication de farine de riz comprenant une étape de conditionnement d'humidité (3) pour ajouter de l'eau aux grains de riz, **caractérisé en ce que** le procédé de prétraitement de broyage comprend aussi une étape d'homogénéisation d'humidité (1) pour fournir de l'air à faible humidité au riz broyé ayant une teneur en humidité de 13,0 ∼ 16,0 % (% à l'état humide), pour ajuster la teneur en humidité du riz broyé à 11,0 ∼ 13,0 % (% à l'état humide), homogénéisant ainsi la teneur en humidité ; et **en ce que**
l'étape de conditionnement d'humidité (3) est destinée à ajouter de l'eau aux grains de riz qui sont passés par l'étape d'homogénéisation d'humidité (1) jusqu'à ce que la teneur en humidité dans chacun des grains de riz atteigne 20,0 ∼ 45,0 % (% à l'état humide) et à faciliter l'absorption d'eau dans le cœur de chacun des grains du riz broyé après l'addition d'eau.

2. Procédé de prétraitement de broyage de farine pour la fabrication de farine de riz selon la revendication 1, dans lequel il y a une étape d'enlèvement de son (2), située entre l'étape d'homogénéisation d'humidité et l'étape de conditionnement d'humidité, pour ajouter de l'eau au riz broyé à humidité homogénéisée pour ramollir la couche aleuronique de chacun des grains de riz, et retirer tant le son que la couche aleuronique ramollie de la surface de chaque grain de riz par la friction des grains de riz les uns contre les autres.

3. Appareil de prétraitement de broyage de farine pour la production de farine de riz **caractérisé en ce que** l'appareil de prétraitement de broyage de farine comprend
une machine de séchage à chute (10) pour fournir de l'air à une température de 40∼60 °C et une faible humidité de moins de 10 % d'humidité relative au riz broyé ayant une teneur en humidité dans une plage de 13,0 ∼ 16,0 (% à l'état humide) pendant environ 10∼20 minutes tandis que les grains de riz sont dans des passages de chute de grains de riz (7b), de telle sorte que le riz broyé est homogénéisé à la teneur en humidité de 11,0 ∼ 13,0 % (% à l'état humide) ;
une machine de conditionnement du type à tambour rotatif (30) pour ajouter de l'eau aux grains de riz qui ont été homogénéisés à la teneur en humidité de 11,0 ∼ 13,0 % (% à l'état humide), jusqu'à ce que la teneur en humidité dans chacun des grains de riz atteigne 20,0 ∼ 45,0 % (% à l'état humide), et effectuer un traitement de repos des grains de riz pendant 10∼30 minutes ; et
une machine de polissage de riz du type humidifiant (20), située entre la machine de séchage à chute et la machine de conditionnement d'humidité du type à tambour rotatif, pour ajouter de l'eau aux grains de riz afin de ramollir la couche aleuronique sur chacun des grains de riz, et pour retirer tant le son que la couche aleuronique ramollie des grains de riz par la friction des grains de riz les uns contre les autres.

4. Appareil de prétraitement de broyage de farine pour la fabrication de farine de riz selon la revendication 3, dans lequel la machine de conditionnement d'humidité du type à tambour rotatif (30) comprend un tambour rotatif (31) arrangé pour tourner autour d'un axe d'un fût de celui-ci et capable de varier un angle d'inclinaison de celui-ci à l'horizontale dans une direction longitudinale du fût, un dispositif d'addition d'eau (34) pour fournir de l'eau dans le tambour rotatif, et un convoyeur à courroie circulaire (36) comprenant une courroie (36a) adaptée pour recevoir les grains de riz déchargés du tambour rotatif, et se déplacer sur une voie circulaire pendant 10 ∼ 30 minutes afin que l'eau déposée sur la surface de chaque grain de riz soit absorbée dans son cœur.
